(19) Europäisches Patentamt / European Patent Office / Office européen des brevets

(11) **EP 2 687 036 B1**

(12) **EUROPEAN PATENT SPECIFICATION**

(45) Date of publication and mention
of the grant of the patent:
**17.08.2016   Bulletin 2016/33**

(21) Application number: **12715360.9**

(22) Date of filing: **12.04.2012**

(51) Int Cl.:
*H04W 12/08* (2009.01)   *H04W 48/08* (2009.01)
*H04W 76/02* (2009.01)   *H04L 29/06* (2006.01)
*H04L 12/24* (2006.01)   *H04L 12/28* (2006.01)
*H04W 88/08* (2009.01)   *H04W 84/12* (2009.01)

(86) International application number:
**PCT/EP2012/056638**

(87) International publication number:
**WO 2012/140115 (18.10.2012 Gazette 2012/42)**

(54) **PERMITTING ACCESS TO A NETWORK**

GEWÄHRUNG DES ZUGRIFFS ZU EINEM NETZWERK

PERMETTRE L'ACCÈS À UN RÉSEAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.04.2011   US 201113087867**

(43) Date of publication of application:
**22.01.2014   Bulletin 2014/04**

(73) Proprietor: **Skype
Dublin 2 (IE)**

(72) Inventor: **KAAL, Madis
EE-10912 Tallinn (EE)**

(74) Representative: **Driver, Virginia Rozanne
Page White & Farrer
Bedford House
John Street
London WC1N 2BF (GB)**

(56) References cited:
**EP-A1- 1 708 415        US-A1- 2005 050 318
US-A1- 2007 101 136**

**Description**

Field of the Invention

The present invention relates to permitting access to a network. In particular, the present invention relates to permitting access to a network by sharing access credentials over a communication system.

Background

Devices can access, and communicate with, a network via an access point of the network. The network may be a Local Area Network (LAN), such as a LAN of a business to which employees of the business can connect. Alternatively, the network may be a Wide Area Network (WAN), such as the Internet. The access point can be a wireless access point such that devices can communicate with the access point wirelessly (e.g. using a WiFi connection, or some other wireless connection as is known in the art).

In order for a device to communicate with an access point, the device may be required to use a particular set of access credentials for accessing the network via the access point. When a device uses the correct set of access credentials for a particular access point then the device is permitted to access the network via the access point, and will thereby use the correct protocol in communicating over the network via the access point. By requiring the device to have the correct access credentials, it can be ensured that only particular devices (i.e. those using the correct access credentials) can access the network via the access point. Limiting access to the network via the access point in this way can be useful, e.g. to prevent unwanted users accessing a particular network via a particular access point.

A wireless access point is uniquely identifiable 'over the air' by two of its properties: (i) a user-specified Service Set Identifier (SSID) which is a name of the wireless network set by the user, and (ii) a wireless interface Media Access Control (MAC) address that is a unique 48 bit value assigned to the access point by the manufacturer of the access point. The SSID and the MAC address act as identifiers of the access point.

Access credentials for accessing a wireless network via an access point may include an encryption method (such as Wired Equivalent Privacy (WEP), Wi-Fi Protected Access (WPA), or Wi-Fi Protected Access version 2 (WPA2)) and an encryption algorithm (such as Temporary Key Integrity Protocol (TKIP), or Advanced Encryption Standard (AES)) to be used when communicating with the access point. The access credentials may also include a network key (or "access key") which must be verified in order for a device to be permitted to access the network via the access point. The length of the network key may be dependent on the chosen encryption method. For a device to be able to gain access to the network via the access point, the access credentials have to be available to the device. The access credentials required to access the network via the access point may be specific to the particular access point used.

The access credentials are used to limit the number of devices that connect to a network via a particular access point. However, in order for some devices to be permitted to connect to the network via the particular access point, those devices should be provided with the required access credentials for accessing the network via the particular access point.

US2005/0050318 discloses a user PC which reads security information regarding itself, and acquires a profile including security information in a profile acquisition/output unit, the profile being created in an administrator's PC administering the setting of an access point. The security information included in the profile and the read information are compared with each other, and when both coincide, a setting or wireless communications is performed by a communication setting unit by use of the profile.

Summary

Access credentials for accessing a network via an access point may be known at a first node in a communication system. The access credentials can be provided to a second node in the communication system in a secure manner, such that the access credentials can only be used if the second node is within range of communicating with the access point. In order to achieve this, the access credentials can be encrypted and then provided to the second node over the communication system. Advantageously, the access credentials are encrypted using at least one identifier of the access point, such that the at least one identifier of the access point is required in order to decrypt the encrypted access credentials. For the second node to decrypt the encrypted access credentials the second node determines the at least one identifier of the access point by communicating with the access point and then uses the determined at least one identifier to decrypt the encrypted access credentials. There is therefore provided a method of hiding the access credentials until the second node is able to communicate with the access point.

According to one aspect of the invention there is provided a method of providing access credentials from a first node to a second node of a communication system, said access credentials being for accessing a network via an access point, the method comprising: determining, at the first node, at least one identifier of the access point; using a predetermined encrypting function and the determined at least one identifier of the access point to encrypt the access credentials at the first node in such a way that the at least one identifier of the access point is required in order to decrypt the encrypted access credentials; and providing the encrypted access credentials from the first node over the communication system to the second node, thereby allowing the second node to access the network if the second node can determine the at least one identifier of the access point and decrypt the encrypted access credentials using the at least one identifier of the access point.

According to another aspect of the invention there is provided a provider node to communication system for providing access credentials to a receiver node of the communication system, said access credentials being for accessing a network via an access point, the provider node comprising; determining means for determining at least one identifier of the access point; encrypting means for encrypting the access credentials using a predetermined encrypting function and the determined at least one identifier of the access point in such a way that the at least one identifier of the access point is required in order to decrypt the encrypted access credentials; and providing means for providing the encrypted access credentials from the provider node over the communication system to the receiver node, thereby allowing the receiver node to access the network if the receiver node can determine the at least one identifier of the access point and decrypt the encrypted access credentials using the at least one identifier of the access point.

In preferred embodiments, the step of using a predetermined encrypting function and the determined at least one identifier of the access point to encrypt access credentials comprises: deriving an encryption key from the determined at least one identifier of the access point using a predetermined first deriving function; and using the encryption key in the predetermined encrypting function to encrypt the access credentials.

In preferred embodiments the step of using a predetermined encrypting function and the determined at least one identifier of the access point to encrypt access credentials comprises encrypting check data along with the access credentials, said check data being for validating the result of decrypting the encrypted access credentials using said predetermined decrypting function. Preferably, the method further comprises deriving said check data from the determined at least one identifier of the access point using a predetermined derivation function.

The at least one identifier of the access point may comprise a Service Set Identifier and a Media Access Control address of the access point. The access credentials may comprise at least one of: (i) an encryption method; (ii) an encryption algorithm; and (iii) a network key, to be used for accessing the network via the access point.

Therefore, the second node can only determine the access credentials (by decrypting them) by using the at least one identifier of the access point, and the second node only receives the at least one identifier of the access point when the second node is within range of communicating with the access point. This limits the re-distribution of the access credentials throughout the communication system. Therefore more security in the distribution of the access credentials is provided.

Brief Description of the Drawings

For a better understanding of the present invention and to show how the same may be put into effect, reference will now be made, by way of example, to the following drawings in which:

Figure 1 shows a communication system and a network according to a preferred embodiment;

Figure 2 is a schematic diagram of a user terminal according to a preferred embodiment;

Figure 3 is a flow chart of a first process of permitting access to a network;

Figure 4 is a representation of a user interface of a client according to a preferred embodiment; and

Figure 5 is a flow chart of a second process of permitting access to a network.

Detailed Description of Preferred Embodiments

Preferred embodiments of the invention will now be described by way of example only.

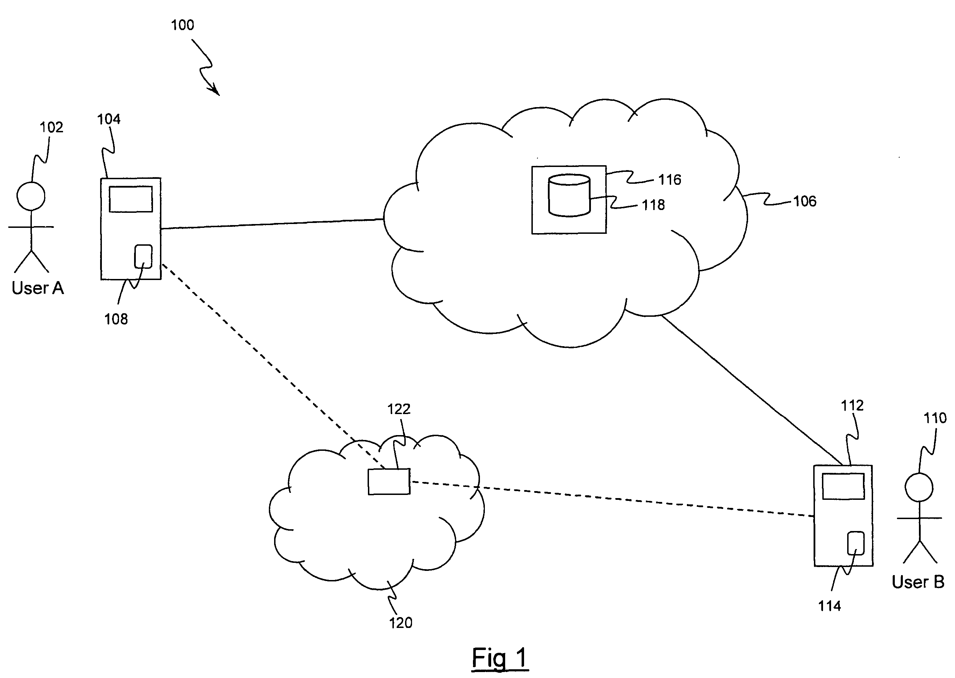

Figure 1 shows a communication system comprising a first user ("User A") 102 who has an associated first user terminal 104 and a second user ("User B") 110 who has an associated second user terminal 112. The user terminals 104 and 112 can communicate over the network 106 in the communication system, thereby allowing the users 102 and 110 to communicate with each other over the network 106. In the preferred embodiment the communication system is a packet-based, P2P communication system, but other types of communication system could also be used, such as non-P2P, VoIP or IM systems. The network 106 may, for example, be the Internet. The user terminal 104 may be, for example, a mobile phone, a personal digital assistant ("PDA"), a personal computer ("PC") (including, for example, Windows™, Mac OS™ and Linux™ PCs), a gaming device or other embedded device able to connect to the network 106. The user terminal 104 is arranged to receive information from and output information to a user 102 of the user terminal 104. In a preferred embodiment of the invention the user terminal 104 comprises a display such as a screen and an input device such as a keyboard, mouse, touch-screen, keypad and/or joystick. The user terminal 104 is connected to the network 106.

Note that in alternative embodiments, the user terminal 104 can connect to the network 106 via additional intermediate networks not shown in Figure 1. For example, if the user terminal 104 is a mobile device, then it can connect to the network 106 via a cellular mobile network 120 (for example a GSM or UMTS network).

The user terminal 104 executes a communication client 108, provided by a software provider associated with the communication system. The communication client 108 is a software program executed on a local processor in the user terminal 104. The client 108 performs the processing required at the user terminal 104 in order for the user terminal 104 to transmit and receive data over the communication system. As is known in the art, the client 108 may be authenticated to communicate over the communication system through the presentation of digital certificates (e.g. to prove that User A 102 is a genuine subscriber of the communication system - described in more detail in WO 2005/009019).

The user terminal 112 corresponds to the user terminal 104. The user terminal 112 executes, on a local processor, a communication client 114 which corresponds to the communication client 108. The client 114 performs the processing required to allow the user 110 to communicate over the network 106 in the same way that the client 108 performs the processing required to allow the user 102 to communicate over the network 106. Figure 1 shows only two users (102 and 110) for clarity, but many more users may be connected to the communication system, and may communicate over the communication system using respective communication clients executed on respective user terminals, as is known in the art. The communication system includes a server 116 on the network 106, wherein a database 118 is implemented on the server 116.

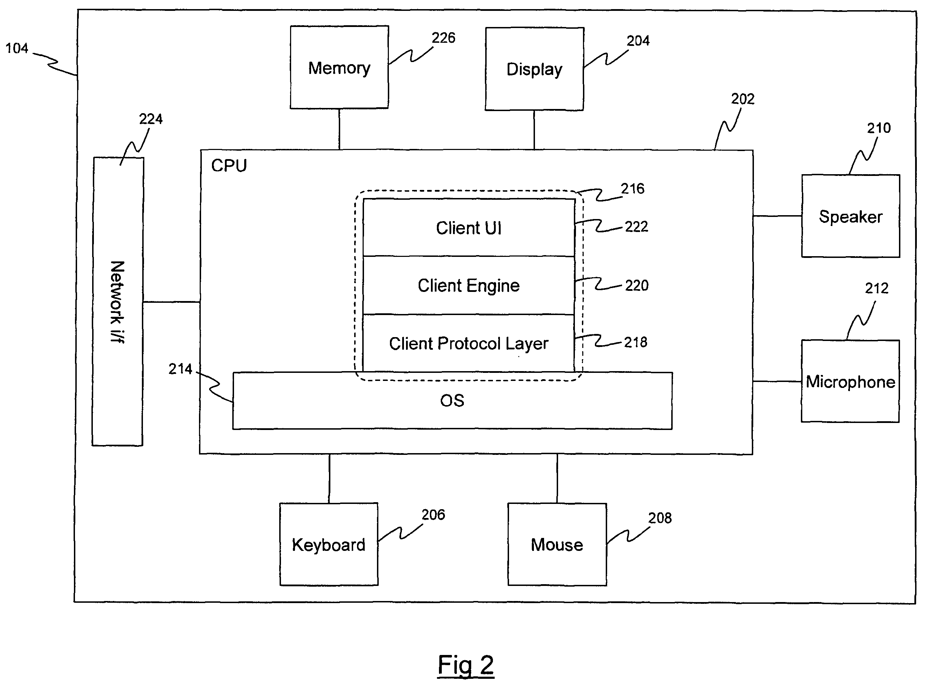

Figure 2 illustrates a detailed view of the user terminal 104 on which is executed client 108. The user terminal 104 comprises a central processing unit ("CPU") 202, to which is connected a display 204 such as a screen, input devices such as a keyboard (or a keypad) 206 and a pointing device such as a mouse 208. The display 204 may comprise a touch screen for inputting data to the CPU 202. An output audio device 210 (e.g. a speaker) and an input audio device 212 (e.g. a microphone) are connected to the CPU 202. The display 204, keyboard 206, mouse 208, output audio device 210 and input audio device 212 are integrated into the user terminal 104. In alternative user terminals one or more of the display 204, the keyboard 206, the mouse 208, the output audio device 210 and the input audio device 212 may not be integrated into the user terminal 104 and may be connected to the CPU 202 via respective interfaces. One example of such an interface is a USB interface. The CPU 202 is connected to a network interface 224 such as a modem for communication with the network 106. The network interface 224 may be integrated into the user terminal 104 as shown in Figure 2. In alternative user terminals the network interface 224 is not integrated into the user terminal 104. The user terminal 104 also comprises a memory 226 for storing data as is known in the art.

Figure 2 also illustrates an operating system ("OS") 214 executed on the CPU 202. Running on top of the OS 214 is a software stack 216 for the client 108. The software stack shows a client protocol layer 218, a client engine layer 220 and a client user interface layer ("UI") 222. Each layer is responsible for specific functions. Because each layer usually communicates with two other layers, they are regarded as being arranged in a stack as shown in Figure 2. The operating system 214 manages the hardware resources of the computer and handles data being transmitted to and from the network via the network interface 226. The client protocol layer 218 of the client software communicates with the operating system 214 and manages the connections over the communication system. Processes requiring higher level processing are passed to the client engine layer 220. The client engine 220 also communicates with the client user interface layer 222. The client engine 220 may be arranged to control the client user interface layer 222 to present information to the user 102 via the user interface of the client and to receive information from the user 102 via the user interface.

The user terminal 112 is implemented in the same way as user terminal 104 as described above, wherein the user terminal 112 may have corresponding elements to those described herein in relation to user terminal 104.

Figure 1 also shows a network 120 having an access point 122. The access point 122 provides access to the network 120 for devices outside of the network 120. The network 120 may include other access points (not shown in Figure 1). The network 120 is a wireless network, but in other embodiments the network 120 may not be a wireless network. The user terminals 104 and 112 can access the network 120 by communicating wirelessly with the access point 122, as shown by the dotted lines in Figure 1. The wireless communication between the access point 122 and the user terminals 104 and 112 may use a WiFi connection or another type of wireless connection as is known in the art, such as a Bluetooth connection or an infra-red connection. The user terminal 104 can connect to the network 120 using either the network interface 224 or another network interface of the user terminal 104 (not shown in Figure 2).

The network 120 may be a Local Area Network (LAN), such as an intranet of a business. Alternatively, the network 120 may be a Wide Area Network (WAN) such as the Internet. It should be appreciated that the network 120 may be different to network 106 as shown in Figure 1. Alternatively, the network 120 may be the same as the network 106 of the communication system, for example both network 106 and network 120 may be the Internet. For example, the access point can be set up as a bridge to an internet connection, and in that case the network 120 will be the internet 106. However, in other embodiments, the access point is used as a router that creates a LAN 120 for clients, and routes traffic between the LAN 120 and the internet 106. If the networks 106 and 120 are the same then the type of connection used between the user terminals 104 and 112 and the network 106 may be different to the type of connection used between the user terminals 104 and 112 and the network 120 (although this is not necessarily the case). For example, where both networks 106 and 120 are the Internet, the user terminals 104 and 112 may be connected to the network 106 using a first type of connection (e.g. via a mobile telephony network, such as via a 3G connection) whereas the user terminals 104 and 112 may be connected to the access point 122 of the network 120 using a second type of connection (e.g. via a WiFi connection). The second type of connection (e.g. WiFi connection) may support faster data transmission and/or may be cheaper to use than the first type of connection (e.g. via the mobile telephony network), so the user terminals 104 and 112 may prefer to access the network 120 via the access point 122 even if they are already connected to the network 106.

The user 102 may be associated with other users in the communication system who are friends, or "contacts" of the first user. In the preferred embodiment described herein, users A and B (102 and 110) are contacts of each other in the communication system. Some information may be stored in the communication system about each of the users in the communication system, such as their name and a username in the communication system, and other more personal information such as their hobbies, their contact details, the user's photos, etc. This information may be stored as a profile of a user in the communication system. The profile of each user is stored at that user's respective user terminal. In addition, the profiles of both users A and B (102 and 110) may be stored in the database 118 on the server 116 of the communication system. Using the database 118 on the central server 116 significantly simplifies enterprise-level sharing, because this allows backup information of users to be centrally updated with credentials shared by the enterprise. A system has to be present to allow access to only data of the users who belong to the enterprise. In the case of the Skype communication system, the Skype Manager provides such system. Whilst it can be useful to use the database 118 in the server 116 to store the private profiles of the users, in a truly peer-to-peer (P2P) network the central database 118 is not required for credential sharing to work according to the system described herein.

As described above, the profile for the user A (102) may be divided into two parts to be utilized differently in the communication system. A first part of user A's profile is public, meaning that the information in the first part of the profile is made available for all of the users of the communication system to see. For example, the first part of the profile may include the user 102's name ("User A") and a username in the communication system (which may be unique in the communication system to thereby uniquely identify the user 102). The user's username may not be the same as the user's name ("User A") because the username is required to be unique in order to uniquely identify the user 102 in the communication system whereas there may be more than one user in the communication system with the same name ("User A"). The User A can share the credentials to himself too, for example when running the client on a first devices to enter network credentials, the user A can allow the credentials to be accessed from other devices where User A signs in. This assumes that private profile attributes are synchronized between instances, for example using a central server. The public information in the public part of user A's profile would allow another user in the communication system (who is not yet a contact of User A) to search for User A in the communication system. A second part of User A's profile is private, meaning that the information in the second part of the profile is only made available to authorized contacts of the user 102. For example, the information in the second part of the profile may be information that the user would want to share with his contacts but not with other users in the communication system. For example, the second part of the profile may include the user's contact details, the user's hobbies and the user's photos. The information in the profile may be retrieved by the communication client 114 executing on user terminal 112.

The system of sharing private profile details to a limited number of other users (e.g. only to contacts) creates a framework that allows controlled sharing of information to take place. One piece of information that can be shared this way is information needed to gain access to networks, such as access credentials. For example, the user 102 can store access credentials for accessing the network 120 via the access point 122 in the database 118. In this way, the first user 102 can provide access credentials in the private part of his profile in the communication system. The information in the profile of user 102 (including the access credentials) is stored in a database (e.g. in memory 226) of the user terminal 104 and may also be stored in the database 118 (or "store") of the server 116. The client 114 of the second user 110 can access the access credentials from the memory 226 or database 118. Since the second user 110 is a contact of the first user 102, the client 114 is authorised to access the access credentials from the private part of the user 102's profile in the store. The credentials can only be accessed while both users are online, so the credentials should be pre-fetched and stored locally on second users terminal to be available for use later.

As described above, the wireless access point 122 is uniquely identifiable 'over the air' by two of its properties: (i) a user-specified Service Set Identifier (SSID) which is a name of the wireless network 120 set by the owner of the network, and (ii) a wireless interface Media Access Control (MAC) address that is a unique 48 bit value assigned to the access point 122 by the manufacturer of the access point 122. The SSID and the MAC address act as identifiers of the access point 122.

The access credentials for accessing a wireless network via an access point may include an encryption method (such as WEP, WPA, or WPA2) and an encryption algorithm (such as TKIP or AES) to be used when communicating with the access point 122. The access credentials may also include a network key (or "access key") which must be verified in order for a user terminal to be permitted to access the network 120 via the access point 122. The length of the network key may be dependent on the chosen encryption method. For a user terminal to be able to gain access to the network 120 via the access point 122, the access credentials have to be available to the user terminal. The access credentials required to access the network 120 via the access point 122 may be specific to the particular access point 122 used.

The access credentials are shared between clients in the communication system such that User B can access the network 120 via the access point 122, but User B does not become aware of the access credentials. Therefore, User B cannot provide the access credentials to other users in the communication system. This is achieved by the operation of the clients 108 and 114, as described below.

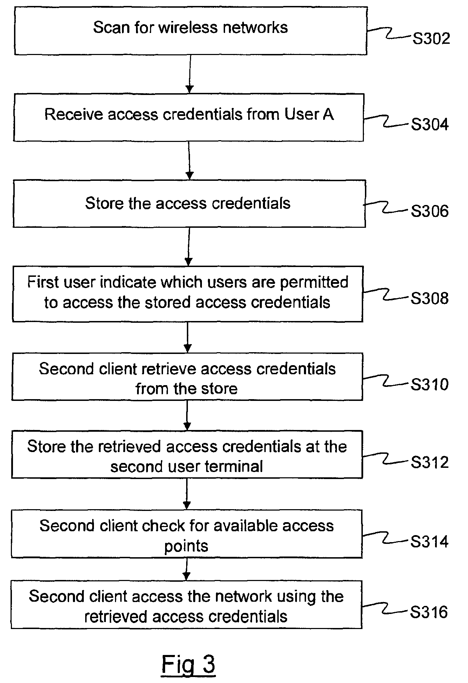

With reference to Figure 3 there is now described a method of permitting access to the network 120 according to a preferred embodiment. User A 102 has the access credentials required to access the network 120 via the access point 122. This may be because User A 102 is the owner of access point 122 or because User A 102 is trusted by the operator of the network 120. User A 102 wants to share the access credentials with User B 110 in a secure manner. In step S302 the client 108 of the first user 102 scans for wireless network access points within range of the user terminal 104. An access point is "within range" of the user terminal 104 if the user terminal 104 can currently communicate with that access point. In step S302 the client 108 determines that the access point 122 is within range of the user terminal 104. The client 108 provides the SSID and MAC addresses of the access points that it finds in the scan of step S302 to the user 102. The SSID identifies the network 120 whilst the MAC address identifies the access point 122.

In step S304 the user 102 enters data about the wireless network 120 at a user interface of the client 108 on the user terminal 104. The data entered by the user 102 in step S304 includes at least some of the access credentials required to access the network 120 via the access point 122. For example, the user 104 may enter at least one of the network key, the encryption method and encryption algorithm required to access the network 120 via the access point 122.

Following step S304 the client 108 has all of the data required to access the network 120 via the access point 122, including the relevant SSID, MAC address and access credentials (encryption method, encryption algorithm and network key). Although in the preferred embodiments, the client 108 scans for wireless network within range to assist the user 102 by determining the SSID and MAC addresses, in alternative embodiments, the user 102 may input all of the data to the client 108 required to access the network 120 via the access point 122, including the SSID and MAC address, which may or may not have been determined by the client 108 in step S302.

The access credentials have a validity period associated with them. In this sense the access credentials expire after a predetermined time period, such that following the predetermined time period, the access credentials can no longer be used to provide access to the network. For consumer users, having a validity period is not mandatory, and may default to 'forever' (which is equivalent to having no validity period). For business user, having a finite validity period enables access to the network to be limited to those users acquiring the access credentials within the validity period. When the validity period of one set of access credentials expires a new set of access credentials may be used having a subsequent validity period. The validity periods of the old and new sets of access credentials may be contiguous, or there may be a time gap between the validity periods. Another option is for the validity periods of the old and new sets of access credentials to overlap. This would result in multiple sets of access credentials being valid for an access point at a given point in time when new access keys (i.e. new access credentials) are distributed while old access keys (i.e. old access credentials) are still in force.

In step S306 the access credentials and the SSID and the MAC address of the access point 122 are stored at the user terminal 104 and/or in the database 118 on the server 116 of the communication system. The access credentials and the SSID and the MAC address of the access point 122 are stored in a private part of the user 102's profile in the communication system. In this way, only communication clients of those users in the communication system who are contacts of the user 102 can access the access credentials, SSID and MAC address stored at the user terminal 104 and/or in the database 118 by the user 102. In a general sense, a client of any user of the communication system is able to store data about wireless networks into the user's private profile.

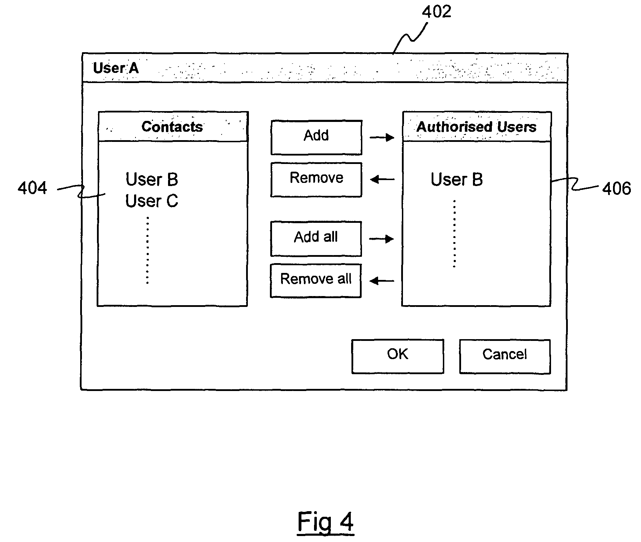

In step S308 the user 102 indicates which users of the communication system are permitted to access the stored access credentials from the private part of his profile. In this way, the user 102 identifies users whose communication clients can access the access credentials stored in the private part of the user 102's profile. The first user 102 may indicate that clients of all of his contacts can access the access credentials from the private part of his profile. Alternatively the user 102 may identify a sub-set of his contacts whose clients can access the access credentials from the private part of user 102's profile. For example, the user interface 402 of the client 108 shown in Figure 4 may be displayed to the user 102 on the display 204 of the user terminal 104. The user interface 402 allows the user 102 to identify a list of authorised users. As shown in Figure 4, the user interface 402 comprises a list of contacts 404 and a list of authorised users 406. The user 102 can add/remove contacts from the list of authorised users 406, for example, by actuating the buttons shown in Figure 4 labelled "Add", "Remove", "Add all" and "Remove all" appropriately. The authorised users in list 406 represent a sub-set of the contacts of the user 102 whose clients are authorised to access the access credentials stored in the private part of the user 102's profile in the communication system. Different "contact groups" may be assigned in the communication system which are different sub-sets of contacts which may be treated in a common manner. A contact group may be assigned to include the authorised users. This may facilitate the user 102 in setting up and managing the list of authorised users. For example, all of the employees of a business may be included in a contact group and thereby assigned as authorised users to access the access credentials for accessing a network associated with the business. The user interface 402 is one example of a suitable user interface for allowing the user 102 to identify a list of authorised users, but other suitable user interfaces could be used as would be apparent to a skilled person.

Following step S308 clients of users on the "authorised users" list can access the access credentials stored in the private part of the user 102's profile on the database 118 of the server 116.

In step S310, when the client 114 has network connectivity and is online, the client 114 accesses the communication system and retrieves any access credentials that it can (e.g. from the user terminal 104 if the user terminal 104 is also online or from the database 118). For example, the client retrieves access credentials stored on the profiles of any of the user 110's contacts stored in the communication system (e.g. on database 118). More generally, the client 114 can retrieve any access credentials that it is permitted to access in the communication system. Therefore, as part of step S312 the client 114 retrieves the access credentials stored on user 102's profile during step S306. The client 114 is able to retrieve the access credentials from user 102's profile because in step S308 the user 102 had indicated that the client 114 of the user 110 is permitted to access those access credentials. It should be noted that the client 114 may access the user 110's profile as well as other users in the communication system to retrieve stored access credentials.

In step S312 the access credentials retrieved in step S310 are stored locally at the user terminal 112. This allows the client 114 at the user terminal 112 to access the access credentials at a subsequent point in time, even if the user terminal 112 no longer has connectivity to the network 106.

In step S314, at some subsequent time, the client 114 of the second user 110 checks for available access points within range of the user terminal 112. The client 114 may perform the check of step S310 in response to the user 110 indicating via the user interface of the client 114 that the user 110 would like to access the network 120. Alternatively, when the client 114 is initialised (e.g. on start-up or on wakeup from sleep), the client 114 will do a scan for wireless networks in range (i.e. perform the check of step S314). If the client 114 finds during step S314 that there are access points within range of the user terminal 112 then the client determines the SSID and MAC addresses of the discovered access points. For example, the SSID and MAC address of the access point 122 may be transmitted from the access point 122 to the user terminal 112 wirelessly.

The client 114 can then determine whether any of the access credentials stored locally at the user terminal 112 in step S312 can be used to access the network 120 via any of the access points that were found in step S314. In order to do this, the client 114 can use the SSID and MAC addresses of the access points found in step S314 and see whether any of these identifiers match the SSID and MAC addresses of the access points for which access credentials have been stored locally in step S312. If a match is found then the client 114 may be able to access the network 120 via the access point with the matching identifiers. When a match is found then, in step S316, the client 114 can access the network via the access point using the retrieved access credentials.

If a match is found for a particular access point then the client 114 may connect to the network 120 via the matching access point automatically (e.g. if the access credentials are retrieved from the user 110's own profile B then the client 114 may connect to the network automatically via the matching access point). In this way, the user 110 need not be made aware of the process through which the client 114 goes in order to connect to the network 120 via the matching access point. Alternatively, when a match is found then the client may request instruction from the user 110 before accessing the network 120 via the matching access point (e.g. if the matching access credentials are retrieved from a profile in the communication system which is not user 110's, then the client 114 prompts the user 110 to determine whether the user 110 wants to connect to the matching network). If user 110 indicates that he has a desire to connect to the matching network then the client 114 connects to the matching network using the retrieved access credentials.

As an example, in step S314 the client 114 determines that the access point 122 is within range and receives the SSID and MAC address of the access point 122 from the access point 122. The client 114 retrieves the access credentials and the corresponding SSID and MAC address which have been previously stored locally at the user terminal 112 in step S312. The client determines that the SSID and MAC address of the retrieved access credentials match the SSID and MAC address of the access point 122 that was found in step S314. Then the client 114 will use the user interface of the client 114 to ask the user 110 whether he would like to connect to network 120 using the access credentials retrieved from user 102's profile. If the user 110 indicates that he would like to connect to network 120 using the access credentials retrieved from user 102's profile (e.g. by clicking on a "yes" button on the user interface of the client 114 displayed on the user terminal 112) then the client 114 connects to the network 120 via the access point 122 using the access credentials that were stored in step S306.

In this way, the access credentials can be shared by user 102 over the communication system to particular users of the communication system (e.g. to the contacts of user 102 or to a sub-set of the contacts of user 102) in a controlled manner to thereby control which users are able to access the network 120 via the access point 122. In this way, the method described above allows the sharing of access credentials to a limited number of other users in the communication system using the private profile of user 102 in the communication system.

Furthermore, the shared access credentials are never shown to the second user 110 in a manner which he can understand (e.g. they are not shown to the user 110 in plain text form). One way to achieve this is to not display the access credentials to the user 110. Another way to achieve this is to encrypt the access credentials so that even if they are displayed to the user 110, the user 110 would not understand them. This is to make it harder for User B 110 to re-distribute the shared access credentials of user 102 (User A) to users that the user 102 (User A) does not want to share the access credentials with. In other words, by preventing the access credentials from being conveyed to the user 110 in a form which is intended to be understood by the user 110, the user 110 cannot pass on the access credentials to other users in the communication system to whom the user 102 may not have wished the access credentials to be provided to. This improves the security of the system for sharing access credentials.

As described above, the access credentials are stored at the user terminal 104 (and may also be stored in the central database 118 on the server 116 to be used as backup and synchronization storage) along with other private profile fields of the user 102's profile. This allows the user 102 to access the stored access credentials from different devices connected to the communication system. In this way, the stored access credentials are synchronized across different devices and instances of a particular user (e.g. User A 102). This allows all of user A's devices to access all of the wireless networks he knows by managing the list of access credentials on any of those devices.

For business users a feature can be provided on the server side of the communication system to manage a company-wide list of access points and corresponding access credentials. This may allow access credentials for many access points to be changed in one go. The business (or "enterprise") could populate a contact list of all its users with an 'enterprise network' account, or add the shared access credentials to an account that is stored in all contact lists anyway, for example IT support desk. In this way the access credentials can be provided to all users of the communication system associated with the business, e.g. to allow the users to access a network associated with the business e.g. a LAN of the business. Any user using a system can create an 'IT support' account, and share network credentials over this account. However, a special system has to be available for allowing a user to populate other user's contact lists in a controlled manner, so that only users who have authorized such action are affected. For example, the Skype communication system has Skype Manager that can be used for this.

In summary of the above, when user A enters access credentials for accessing the network, these access credentials are stored on the device 104 locally (although a copy may be made and stored on the server 116 for backup). In some embodiments, only a subset of the stored access credentials might be shared with other users of the communication system, and each of the other users might see a different subset of access credentials (if the UI of the client 108 permits this more complicated management structure).

Once user A has indicated which users are allowed to receive the stored access credentials, other clients of the indicated users will be able to retrieve the access credentials (where the other clients must be online for this to happen). The clients of the other users can then use the access credentials that they have received to access the shared networks at some subsequent point in time. To access the network, the access credentials are stored on the other user terminals (of the other users) because the network for accessing the server 116 will not be accessible without the access credentials being available to the user terminal.

The method of sharing access credentials between the users 102 and 110 (or between different devices of the same user, e.g. user 102) described above in relation to Figure 3, does not specify in what format the credentials would be shared. The method uses the clients to share access credentials without ever providing the access credentials to the user 110 in a form in which he would understand them. This provides the security for the user 102 that access credentials that he shares over the communication system will not be redistributed to users other than those that user 102 has identified as being permitted to use to the access credentials. However, in other embodiments the access credentials may be shared over the communication system in such a way that the access credentials would only be usable if the particular wireless network to which the access credentials provide access is within range of a user terminal which is executing the client which receives the access credentials.

An extra level of security in relation to the access credentials is provided by encrypting the access credentials that are stored in the communication system (e.g. on database 118). This allows the access credentials to be kept secret from 3rd parties who are not able to decrypt the encrypted access credentials. However, to be able to gain access to the network 120, the access credentials have to be available in unencrypted form. Any reasonably strong encryption algorithm could be used to encrypt the access credentials, but the tricky part is what encryption key to use, and how to make the encryption key available to users who need to use the access credentials to access the network 120 (but not to those users who are not permitted to retrieve the access credentials).

The inventor has realized that the objective of hiding the access credentials until they can actually be used can be achieved by using properties of the access point 122 (such as the SSID and MAC address of the access point) to derive the encryption key for encrypting the access credentials for accessing the network 120 via the access point 122. In other words, the access credentials associated with the access point 122 are encrypted in such a way that knowledge of some property of the access point 122 is required in order to decrypt the access credentials. In this way, only those clients (or users) who can determine the required property of the access point 122 will have the ability to decrypt the encrypted access credentials. Preferably the property of the access point is a property that is determined by communicating with the access point 122 itself. For example, the property can be an identifier, or some identifiers, of the access point 122, such as the SSID and the MAC address of the access point 122. A client can determine the SSID and MAC address of the access point 122 by communicating with the access point 122 itself, such that if the client is within range of the access point 122 then the client knows the SSID and the MAC address of the access point 122 for which the access credentials apply.

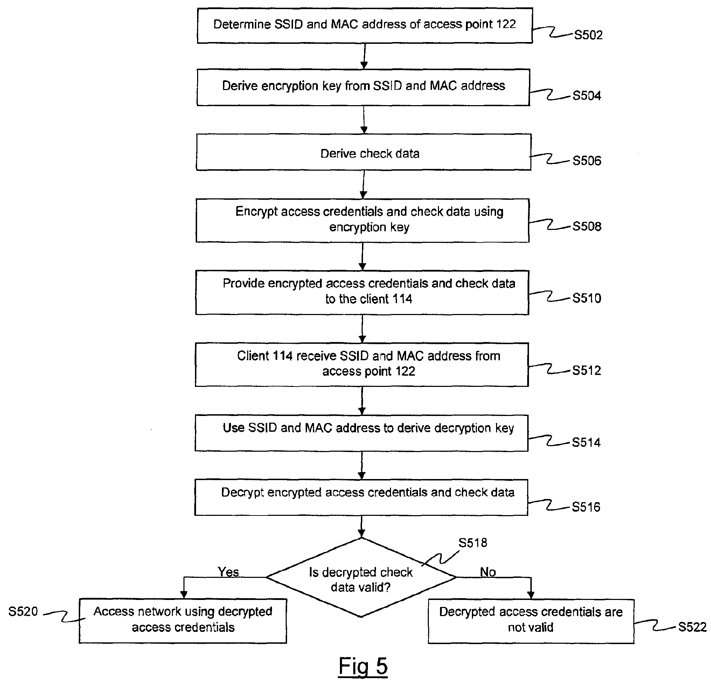

With reference to Figure 5 there is now described a method for encrypting the access credentials for accessing the network 120 via the access point 122, such that only those clients within range of the access point 122 can decrypt the encrypted access credentials.

The client 108 has access to the access credentials required for accessing the network 120 via the access point 122. This may be because the user 102 has input the access credentials into the user terminal 104 (e.g. via a user interface of the client 108) for use by the client 108. Alternatively, the client 108 may retrieve the access credentials from a memory on the user terminal 104 (or on the communication system).

In step S502 the first client 108 determines the SSID and the MAC address of the access point 122. In order to determine the SSID and MAC address of the access point 122 the client 108 may receive the SSID and MAC address from the access point 122 over a wireless connection. Alternatively, the SSID and MAC address of the access point 122 may be stored in memory at the user terminal 104 or on the communication system such that the client 108 can retrieve the SSID and MAC address of the access point 122 from the appropriate memory. Alternatively, the user 102 may input the SSID and MAC address into a user interface of the client 108 on the user terminal 104. It will be appreciated that the client 108 may determine the SSID and MAC address of the access point 122 in one of many different ways, such that following step S502 the client has access to the SSID and MAC address of the access point 122.

In step S504 an encryption key is derived from the SSID and MAC address of the access point 122. For example, the encryption key may be generated using a one-way hash function that takes the SSID and the MAC address of the access point 122 as the input parameters. For example, the SSID and MAC address of the access point 122 can be fed into the MD5 digest function, as is known in the art, such that:

$$\text{ENCRYPTION\_KEY} = \text{MD5}(\text{ SSID} \,\|\, \text{MAC}).$$

As the hash function is non-reversible, the access credentials cannot be decrypted without knowing the SSID and MAC address of the access point 122 (assuming the size of the hash function is large enough to make a brute-force scanning of the entire key space computationally unfeasible). The encryption key can then be used to encrypt the network access credentials before distributing them, as described in more detail below.

When the encrypted access credentials are subsequently decrypted it is useful to have some simple mechanism for determining whether the decryption operation has been successful. Therefore, for determining whether the decryption operation was successful, the decrypted data should contain something that would allow a simple validation of the decryption result. One something that would allow a simple validation of the decryption result. One possible way of achieving this is to include a constant, or checksum of data in the plaintext data (with the access credentials) that could be used to validate the result of the decryption. In other words, some sort of check data may be included with the access credentials prior to encryption of the access credentials, such that it can be determined whether a decryption operation on the access credentials has been successful by determining whether the check data has been decrypted correctly. In step S506 suitable check data is derived to be included with the access credentials before encryption.

If the check data is simply included in the plaintext data of the access credentials then that may disadvantageously allow a 3rd party attempting a brute-force scan of key space to more easily validate a decryption result. A more secure option for the check data is to also derive the check data from one or both of the identifiers of the access point 122 used as the encryption key generation input parameters. For example, the check data might be the result of a message digest function applied to the MAC address of the access point 122 and an arbitrarily chosen constant, e.g. the check data (CHECK) may be given by:

$$\text{CHECK} = \text{MD5}(\text{ MAC} \,\|\, \text{"Salt"}).$$

In this example the word "Salt" has been used as an arbitrary constant, although in other examples, any other constant may be used. It may be necessary that the constant is predetermined such that the clients in the communication system can determine what the constant will be that is used to generate the check data. In the example above, the MAC address of the access point 122 is used to generate the check data, but in other examples, other properties of the access point 122 may be used instead (or as well as) the MAC address, such as the SSID of the access point 122. As would be apparent to a person skilled in the art, other functions may be used to determine the encryption key and the check data, with the message digest function (MD5) described above being just one example of a suitable function.

In step S508 the access credentials and the check data are grouped together and encrypted by the client 108 using the encryption key that was derived in step S504. A person skilled in the art would be aware of a suitable encryption method for encrypting the access credentials and the check data using the encryption key.

The encrypted access credentials and check data can then be provided from the client 108 to the client 114 over the communication system. The first client 108 may simply transmit the encrypted access credentials and check data over the communication system to the second client 114. Alternatively, the encrypted access credentials and check data can then be provided from the client 108 to the client 114 over the communication system as described above, whereby the first client 108 stores the encrypted access credentials and check data at the user terminal 104 (or on the database 118) in the private profile of the user 102 on the communication system. The user 102 authorises the client 114 of the second user 110 to access the encrypted access credentials and check data. The client 114 can then retrieve the encrypted access credentials and check data from user terminal 104 (or the database 118) as described above.

When the second user terminal 112 is able to communicate with the access point 122 then, in step S512, the client 114 can determine the SSID and MAC address of the access point 122. This may be achieved by the access point transmitting the SSID and MAC address of the access point 122 to the client 114 over a wireless connection. The client 114 can only receive the SSID and MAC address of the access point 122 over the wireless connection from the access point 122 when the access point 122 is within range of the user terminal 112, such that the client 114 can communicate with the access point 122.

In step S514 the client 114 uses the SSID and the MAC address of the access point 122 to derive a decryption key (DECRYPTION_KEY) for decrypting the encrypted access credentials and check data which were encrypted using the encryption key. The decryption key is derived using the same function (e.g. the message digest function, MD5) as was used to derive the encryption key. For example, the decryption key (DECRYPTION_KEY) may be given by:

$$\text{DECRYPTION\_KEY} = \text{MD5}( \text{SSID} \parallel \text{MAC}).$$

In step S516 the decryption key is used to decrypt the encrypted access credentials and the check data according to a decryption function which corresponds to the encryption function used to encrypt the access credentials and check data in step S508.

In step S518 the client 114 determines whether the decryption operation has been successful by determining whether the check data is validly decrypted. For example, the client 114 may determine what the check data should be, for example by performing the same derivation as in step S506 (e.g. CHECK = MD5( MAC ∥ "Salt")) and then comparing the result of that derivation with the decrypted check data resulting from the decryption in step S516. If the comparison indicates that the decryption operation has been successful then the client 114 can use the decrypted access credentials to access the network 120 via the access point 122, as shown in step S520. As described above, the client 114 may automatically connect to the network 120 following a positive outcome to step S518. Alternatively, before accessing the network 120 in step S520, the client 114 may prompt the user 110 (e.g. via a user interface of the client 114) to indicate whether he would like to access the network 120.

However, if it is determined in step S518 that the decrypted check data is not valid then in step S522 it is determined that the decrypted access credentials cannot be validly used to access the network 120 via the access point 122. In this case, the client 114 might not attempt to access the network 120 via the access point 122 using the decrypted access credentials.

The client 114 may retrieve as many sets of access credentials as it can from the communication system (e.g. from the profiles of the contacts of user 110, as described above). Furthermore, in step S512, the client 114 may also determine the SSID and MAC address of as many access points as it can currently communicate with. The client 114 can then determine whether any of the retrieved sets of access credentials are valid in relation to any of the access points that it can currently communicate with by performing steps S514 to S522 for each pairing of a set of access credentials with an access point. The client 114 may, or may not, stop determining whether other pairings of a set of access credentials with an access point are valid after finding that one set of retrieved access credentials can be validly used to access a network via one of the access points with which the client 114 can currently communicate.

In this sense, in order to use the access credentials, the software (i.e. the client 114) repeats the decryption key generation method for all access points that are within a usable range. If the encrypted credentials are for one of the networks within range, then the decryption operation will reveal credentials for that particular access point.

In summary, for the client 108 to share the access credentials for the access point 122, identified by the SSID and MAC address of the access point 122, the client 108 will perform following functions:

```
ENCRYPTION_KEY = MD5(SSID ‖ MAC);
CHECK = MD5(MAC ‖ "Salt");
DATA = CHECK + METHOD + ALGORITHM + NWK_KEY;
SHARED_DATA = ENCRYPT(DATA, ENCRYPTION_KEY).
```

Here, the access credentials comprise the network key (NWK_KEY) for validly accessing the network 120 via the access point 122, as well as the encryption method (METHOD) and the encryption algorithm (ALGORITHM) to be used when communicating with the access point 122. The function called ENCRYPT is any encryption function that is suitable for encrypting the data using the encryption key. The SHARED_DATA may include further attributes, either in encrypted or non-encrypted form, most notably expiration time of the access credentials.

In order to use the access credentials, the client 114 will perform the following functions for each access point within range:

```
DECRYPTION_KEY = MD5(SSID ‖ MAC)
CHECK = MD5(MAC ‖ "Salt")
for each set of access credentials retrieved by the client 114 {
     DATA = DECRYPT(SHARED_DATA,DECRYPTION_KEY)
     If DATA(CHECK) = CHECK then {
          METHOD = DATA(METHOD)
          ALGORITHM = DATA(ALGORITHM)
          NWK_KEY = DATA(NWK_KEY)
     }
}
```

The function called DECRYPT is a decryption function that is suitable for decrypting the data using the decryption key, whereby the DECRYPT function corresponds to the ENCRYPT function used to encrypt the access credentials and check data. It can be seen that if the check data in the encrypted data is correctly decrypted (e.g. when it is decrypted it gives the same result as the result of the function MD5( MAC ‖ "Salt")) then the client 114 takes the decrypted encrypting method (METHOD) encrypting algorithm (ALGORITHM) and network key (NWK_KEY) from the decrypted data for use in accessing the relevant network using the relevant access point. In other words, if any of the access points within range of the user terminal 112 results in valid network access credentials then a network can be accessed from that access point with those access credentials.

The methods described above can be implemented in software (e.g. the in the clients described above), or in hardware. More generally, the methods described above can be implemented in a computer program product comprising computer readable instructions for execution by computer processing means (e.g. a CPU) at a node of the communication system (e.g. the user terminal 104 or the user terminal 112).

While this invention has been particularly shown and described with reference to preferred embodiments, it will be understood to those skilled in the art that various changes in form and detail may be made without departing from the scope of the invention as defined by the appendant claims.

**Claims**

1. A method of providing access credentials from a first node (104) to a second node (112) of a communication system (100), said access credentials being for accessing a network (120) via an access point (122), the method comprising:

   determining (S502), at the first node, at least one identifier of the access point;
   using a predetermined encrypting function and the determined at least one identifier of the access point to encrypt the access credentials (S508) at the first node in such a way that the at least one identifier of the access point is required in order to decrypt the encrypted access credentials; and
   providing the encrypted access credentials from the first node over the communication system to the second node (S510), thereby allowing the second node to access the network if the second node can determine the at least one identifier of the access point and decrypt the encrypted access credentials using the at least one identifier of the access point.

2. The method of claim 1, wherein using the predetermined encrypting function and the determined at least one identifier of the access point to encrypt access credentials comprises:

deriving an encryption key (S504) from the determined at least one identifier of the access point using a predetermined deriving function; and
using the encryption key in the predetermined encrypting function to encrypt the access credentials.

3. The method of claim 1, wherein using the predetermined encrypting function and the determined at least one identifier of the access point to encrypt access credentials comprises encrypting check data along with the access credentials, said check data being for validating the result of decrypting the encrypted access credentials using said predetermined decrypting function.

4. The method of claim 3, wherein said check data is derived (S506) from the determined at least one identifier of the access point using a predetermined derivation function.

5. The method of claim 1, wherein the first node comprises a first user terminal, of a first user (102), executing a first communication client (108) for communicating over the communication system, and wherein the second node comprises a second user terminal, of a second user (110), executing a second communication client (114) for communicating over the communication system, wherein the first and second users are contacts in the communication system and wherein the encrypted access credentials are permitted to be provided to the second node on the basis of the second user being a contact of the first user.

6. The method of claim 1, wherein the at least one identifier of the access point comprises a Service Set Identifier and a Media Access Control address of the access point.

7. The method of claim 1, wherein the access credentials comprise at least one of:

   (i) an encryption method;
   (ii) an encryption algorithm; and
   (iii) a network key,

   to be used for accessing the network via the access point.

8. A provider node (104) for a communication system (100) for providing access credentials to a receiver node (112) of the communication system, said access credentials being for accessing a network (120) via an access point (122), the provider node comprising:

   determining means for determining at least one identifier of the access point;
   encrypting means for encrypting the access credentials using a predetermined encrypting function and the determined at least one identifier of the access point in such a way that the at least one identifier of the access point is required in order to decrypt the encrypted access credentials; and
   providing means for providing the encrypted access credentials from the provider node over the communication system to the receiver node, thereby allowing the receiver node to access the network if the receiver node can determine the at least one identifier of the access point and decrypt the encrypted access credentials using the at least one identifier of the access point.

9. The provider node of claim 8, wherein the encrypting means are configured such that using the predetermined encrypting function and the determined at least one identifier of the access point to encrypt access credentials comprises:

   deriving an encryption key (S504) from the determined at least one identifier of the access point using a predetermined deriving function; and
   using the encryption key in the predetermined encrypting function to encrypt the access credentials.

10. The provider node of claim 8, wherein the encrypting means are configured such that using the predetermined encrypting function and the determined at least one identifier of the access point to encrypt access credentials comprises encrypting check data along with the access credentials, said check data being for validating the result of decrypting the encrypted access credentials using said predetermined decrypting function.

11. The provider node of claim 10, wherein the encrypting means are configured such that said check data is derived (S506) from the determined at least one identifier of the access point using a predetermined derivation function.

**12.** The provider node of claim 8, wherein the first node comprises a first user terminal, of a first user (102), configured to execute a first communication client (108) for communicating over the communication system, and wherein the second node comprises a second user terminal, of a second user (110), configured to execute a second communication client (114) for communicating over the communication system, wherein the first and second users are contacts in the communication system and wherein the the providing means are configured such that encrypted access credentials are permitted to be provided to the second node on the basis of the second user being a contact of the first user.

**13.** The provider node of claim 8, wherein the at least one identifier of the access point comprises a Service Set Identifier and a Media Access Control address of the access point.

**14.** The provider node of claim 8, wherein the access credentials comprise at least one of:

(i) an encryption method;
(ii) an encryption algorithm; and
(iii) a network key,

to be used for accessing the network via the access point.

**15.** A computer program product comprising computer readable instructions for execution by computer processing means (202) at a first node (104) of a communication system (100) for providing access credentials from the first node to a second node (112) of the communication system, said access credentials being for accessing a network (120) via an access point (122), the instructions comprising instructions for carrying out the method according to claim 1.

**Patentansprüche**

**1.** Verfahren zur Bereitstellung von Zugriffsberechtigungsdaten von einem ersten Knoten (104) auf einen zweiten Knoten (112) eines Kommunikationssystems (100), wobei die Zugriffsberechtigungsdaten für den Zugriff auf ein Netzwerk (120) über einen Zugriffspunkt (122) dienen, wobei das Verfahren Folgendes umfasst:

Bestimmen (S502), an dem ersten Knoten, von mindestens einer Kennung des Zugriffspunkts;
Verwenden einer vorbestimmten Verschlüsselungsfunktion und der bestimmten mindestens einen Kennung des Zugriffspunkts zur Verschlüsselung der Zugriffsberechtigungsdaten (S508) an dem ersten Knoten in einer Weise, dass die mindestens eine Kennung des Zugriffspunkts erforderlich ist, um die verschlüsselten Zugriffsberechtigungsdaten zu entschlüsseln; und
Übertragen der verschlüsselten Zugriffsberechtigungsdaten von dem ersten Knoten über das Kommunikationssystem zu dem zweiten Knoten (S510), wodurch dem zweiten Knoten der Zugriff auf das Netzwerk ermöglicht wird, wenn der zweite Knoten Folgendes ausführen kann: Bestimmen der mindestens einen Kennung des Zugriffspunkts und Entschlüsseln der verschlüsselten Zugriffsberechtigungsdaten unter Verwendung der mindestens einen Kennung des Zugriffspunkts.

**2.** Verfahren nach Anspruch 1, wobei die Verwendung der vorbestimmten Verschlüsselungsfunktion und der bestimmten mindestens einen Kennung des Zugriffspunkts zur Verschlüsselung von Zugriffsberechtigungsdaten Folgendes umfasst:

Ableiten eines Verschlüsselungsschlüssels (S504) aus der ermittelten mindestens einen Kennung des Zugriffspunkts unter Verwendung einer vorbestimmten Ableitungsfunktion; und
Verwenden des Verschlüsselungsschlüssels in der vorbestimmten Verschlüsselungsfunktion zum Verschlüsseln der Zugriffsberechtigungsdaten.

**3.** Verfahren nach Anspruch 1, wobei die Verwendung der vorbestimmten Verschlüsselungsfunktion und der bestimmten mindestens einen Kennung des Zugriffspunkts zur Verschlüsselung von Zugriffsberechtigungsdaten Folgendes umfasst: die Verschlüsselung von Kontrolldaten zusammen mit den Zugriffsberechtigungsdaten, wobei die Kontrolldaten zur Validierung des Ergebnisses der Entschlüsselung der verschlüsselten Zugriffsberechtigungsdaten unter Verwendung der vorbestimmten Entschlüsselungsfunktion dienen.

EP 2 687 036 B1

4. Verfahren nach Anspruch 3, wobei die Kontrolldaten aus der ermittelten mindestens einen Kennung des Zugriffspunkts unter Verwendung einer vorbestimmten Ableitungsfunktion abgeleitet werden (S506).

5. Verfahren nach Anspruch 1, wobei der erste Knoten ein erstes Benutzerendgerät eines ersten Benutzers (102) umfasst, das einen ersten Kommunikationsclient (108) für die Kommunikation über das Kommunikationssystem ausführt, und wobei der zweite Knoten ein zweites Benutzerendgerät eines zweiten Benutzers (110) umfasst, das einen zweiten Kommunikationsclient (114) für die Kommunikation über das Kommunikationssystem ausführt, wobei der erste und zweite Benutzer Kontakte in dem Kommunikationssystem sind und wobei die verschlüsselten Zugriffsberechtigungsdaten dem zweiten Knoten auf der Grundlage bereitgestellt werden dürfen, dass der zweite Benutzer ein Kontakt des ersten Benutzers ist.

6. Verfahren nach Anspruch 1, wobei die mindestens eine Kennung des Zugriffspunkts eine Dienstsatzkennung (Service Set Identifier) und eine Medienzugriffskontroll-Adresse (Media Access Control) des Zugriffspunkts umfasst.

7. Verfahren nach Anspruch 1, wobei die Zugriffsberechtigungsdaten mindestens eines von Folgendem umfassen:

(i) ein Verschlüsselungsverfahren,
(ii) einen Verschlüsselungsalgorithmus und
(iii) einen Netzwerkschlüssel,

die für den Zugriff auf das Netzwerk über den Zugriffspunkt zu verwenden sind.

8. Anbieterknoten (104) für ein Kommunikationssystem (100) zur Bereitstellung von Zugriffsberechtigungsdaten für einen Empfängerknoten (112) des Kommunikationssystems, wobei die Zugriffsberechtigungsdaten für den Zugriff auf ein Netzwerk (120) über einen Zugriffspunkt (122) dienen, wobei der Anbieterknoten Folgendes umfasst:

ein Bestimmungsmittel zum Bestimmen mindestens einer Kennung des Zugriffspunkts;
ein Verschlüsselungsmittel zum Verschlüsseln der Zugriffsberechtigungen unter Verwendung einer vorbestimmten Verschlüsselungsfunktion und der bestimmten mindestens einen Kennung des Zugriffspunkts in einer Weise, dass die mindestens eine Kennung des Zugriffspunkts erforderlich ist, um die verschlüsselten Zugriffsberechtigungsdaten zu entschlüsseln; und
ein Bereitstellungsmittel zum Übertragen der verschlüsselten Zugriffsberechtigungsdaten von dem Anbieterknoten über das Kommunikationssystem zu dem Empfängerknoten, wodurch dem Empfängerknoten der Zugriff auf das Netzwerk ermöglicht wird, wenn der Empfängerknoten Folgendes ausführen kann: Bestimmen der mindestens einen Kennung des Zugriffspunkts und Entschlüsseln der verschlüsselten Zugriffsberechtigungsdaten unter Verwendung der mindestens einen Kennung des Zugriffspunkts.

9. Anbieterknoten nach Anspruch 8, wobei das Verschlüsselungsmittel so konfiguriert ist, dass die Verwendung der vorbestimmten Verschlüsselungsfunktion und der bestimmten mindestens einen Kennung des Zugriffspunkts zur Verschlüsselung von Zugriffsberechtigungsdaten Folgendes umfasst:

Ableiten eines Verschlüsselungsschlüssels (S504) aus der ermittelten mindestens einen Kennung des Zugriffspunkts unter Verwendung einer vorbestimmten Ableitungsfunktion; und
Verwenden des Verschlüsselungsschlüssels in der vorbestimmten Verschlüsselungsfunktion zum Verschlüsseln der Zugriffsberechtigungsdaten.

10. Anbieterknoten nach Anspruch 8, wobei das Verschlüsselungsmittel so konfiguriert ist, dass die Verwendung der vorbestimmten Verschlüsselungsfunktion und der bestimmten mindestens einen Kennung des Zugriffspunkts zur Verschlüsselung von Zugriffsberechtigungsdaten Folgendes umfasst: die Verschlüsselung von Kontrolldaten zusammen mit den Zugriffsberechtigungsdaten, wobei die Kontrolldaten zur Validierung des Ergebnisses der Entschlüsselung der verschlüsselten Zugriffsberechtigungsdaten unter Verwendung der vorbestimmten Entschlüsselungsfunktion dienen.

11. Anbieterknoten nach Anspruch 10, wobei das Verschlüsselungsmittel so konfiguriert ist, dass die Kontrolldaten aus der ermittelten mindestens einen Kennung des Zugriffspunkts unter Verwendung einer vorbestimmten Ableitungsfunktion abgeleitet werden (S506).

12. Anbieterknoten nach Anspruch 8, wobei der erste Knoten ein erstes Benutzerendgerät eines ersten Benutzers (102)

14

umfasst, das für Folgendes konfiguriert ist: Ausführen eines ersten Kommunikationsclient (108) für die Kommunikation über das Kommunikationssystem, und wobei der zweite Knoten ein zweites Benutzerendgerät eines zweiten Benutzers (110) umfasst, das dafür konfiguriert ist, einen zweiten Kommunikationsclient (114) für die Kommunikation über das Kommunikationssystem auszuführen, wobei der erste und zweite Benutzer Kontakte in dem Kommunikationssystem sind und wobei das Bereitstellungsmittel so konfiguriert ist, dass die verschlüsselten Zugriffsberechtigungsdaten dem zweiten Knoten auf der Grundlage bereitgestellt werden dürfen, dass der zweite Benutzer ein Kontakt des ersten Benutzers ist.

13. Anbieterknoten nach Anspruch 8, wobei die mindestens eine Kennung des Zugriffspunkts eine Dienstsatzkennung (Service Set Identifier) und eine Medienzugriffskontroll-Adresse (Media Access Control) des Zugriffspunkts umfasst.

14. Anbieterknoten nach Anspruch 8, wobei die Zugriffsberechtigungsdaten mindestens eines von Folgendem umfassen:

    (i) ein Verschlüsselungsverfahren,
    (ii) einen Verschlüsselungsalgorithmus und
    (iii) einen Netzwerkschlüssel,

die für den Zugriff auf das Netzwerk über den Zugriffspunkt zu verwenden sind.

15. Computerprogrammprodukt, das computerlesbare Anweisungen zur Ausführung durch ein Computerverarbeitungsmittel (202) an einem ersten Knoten (104) eines Kommunikationssystems (100) zur Bereitstellung von Zugriffsberechtigungsdaten von dem ersten Knoten zu einem zweiten Knoten (112) des Kommunikationssystems umfasst, wobei die Zugriffsberechtigungsdaten für den Zugriff auf ein Netzwerk (120) über einen Zugriffspunkt (122) dienen, wobei die Anweisungen Anweisungen zum Ausführen des Verfahrens nach Anspruch 1 umfassen.

## Revendications

1. Procédé servant à fournir des données d'identification d'accès en provenance d'un premier noeud (104) à un deuxième noeud (112) d'un système de communication (100), lesdites données d'identification d'accès servant à accéder à un réseau (120) par le biais d'un point d'accès (122), le procédé comportant :

    l'étape consistant à déterminer (S502), au niveau du premier noeud, au moins un identifiant du point d'accès ;
    l'étape consistant à utiliser une fonction de chiffrement prédéterminée et ledit au moins un identifiant déterminé du point d'accès pour chiffrer les données d'identification d'accès (S508) au niveau du premier noeud d'une telle manière que ledit au moins un identifiant du point d'accès est nécessaire afin de déchiffrer les données d'identification d'accès chiffrées ; et
    l'étape consistant à fournir les données d'identification d'accès chiffrées en provenance du premier noeud par l'intermédiaire du système de communication au deuxième noeud (S510), pour ainsi permettre au deuxième noeud d'avoir accès au réseau si le deuxième noeud peut déterminer ledit au moins un identifiant du point d'accès et déchiffrer les données d'identification d'accès chiffrées en utilisant ledit au moins un identifiant du point d'accès.

2. Procédé selon la revendication 1, dans lequel l'étape consistant à utiliser la fonction de chiffrement prédéterminée et ledit au moins un identifiant déterminé du point d'accès pour chiffrer les données d'identification d'accès comporte :

    l'étape consistant à dériver une clé de chiffrement (S504) en provenance dudit au moins un identifiant déterminé du point d'accès en utilisant une fonction de dérivation prédéterminée ; et
    l'étape consistant à utiliser la clé de chiffrement dans la fonction de chiffrement prédéterminée pour chiffrer les données d'identification d'accès.

3. Procédé selon la revendication 1, dans lequel l'étape consistant à utiliser la fonction de chiffrement prédéterminée et ledit au moins un identifiant déterminé du point d'accès pour chiffrer les données d'identification d'accès comporte l'étape consistant à chiffrer des données de vérification conjointement avec les données d'identification d'accès, lesdites données de vérification ayant pour objet de valider le résultat du déchiffrement des données d'identification d'accès chiffrées en utilisant ladite fonction de chiffrement prédéterminée.

**4.** Procédé selon la revendication 3, dans lequel lesdites données de vérification sont dérivées (S506) à partir dudit au moins un identifiant déterminé du point d'accès en utilisant une fonction de dérivation prédéterminée.

**5.** Procédé selon la revendication 1, dans lequel le premier noeud comporte un premier terminal d'utilisateur, d'un premier utilisateur (102), exécutant un premier client de communication (108) à des fins de communication par l'intermédiaire du système de communication, et dans lequel le deuxième noeud comporte un deuxième terminal d'utilisateur, d'un deuxième utilisateur (110), exécutant un deuxième client de communication (114) à des fins de communication par l'intermédiaire du système de communication, dans lequel les premier et deuxième utilisateurs sont des contacts dans le système de communication et dans lequel les données d'identification d'accès chiffrées sont autorisées à être fournies au deuxième noeud si le deuxième utilisateur est un contact du premier utilisateur.

**6.** Procédé selon la revendication 1, dans lequel ledit au moins un identifiant du point d'accès comporte un identifiant de l'ensemble de services et une adresse de commande d'accès au support du point d'accès.

**7.** Procédé selon la revendication 1, dans lequel les données d'identification d'accès comportent au moins l'un parmi :

(i) un procédé de chiffrement ;
(ii) un algorithme de chiffrement ; et
(iii) une clé de réseau,

à des fins d'utilisation pour accéder au réseau par le biais du point d'accès.

**8.** Noeud fournisseur (104) pour un système de communication (100) servant à fournir des données d'identification d'accès à un noeud récepteur (112) du système de communication, lesdites données d'identification d'accès servant à accéder à un réseau (120) par le biais d'un point d'accès (122), le noeud fournisseur comportant :

des moyens de détermination servant à déterminer au moins un identifiant du point d'accès ;
des moyens de chiffrement servant à chiffrer les données d'identification d'accès en utilisant une fonction de chiffrement prédéterminée et ledit au moins un identifiant déterminé du point d'accès d'une telle manière que ledit au moins un identifiant du point d'accès est nécessaire afin de déchiffrer les données d'identification d'accès chiffrées ; et
des moyens de fourniture servant à fournir les données d'identification d'accès chiffrées en provenance du noeud fournisseur par l'intermédiaire du système de communication au noeud récepteur, pour ainsi permettre au noeud récepteur d'avoir accès au réseau si le noeud récepteur peut déterminer ledit au moins un identifiant du point d'accès et déchiffrer les données d'identification d'accès chiffrées en utilisant ledit au moins un identifiant du point d'accès.

**9.** Noeud fournisseur selon la revendication 8, dans lequel les moyens de chiffrement sont configurés de telle manière que l'étape consistant à utiliser la fonction de chiffrement prédéterminée et ledit au moins un identifiant déterminé du point d'accès pour chiffrer les données d'identification d'accès comporte :

l'étape consistant à dériver une clé de chiffrement (S504) en provenance dudit au moins un identifiant déterminé du point d'accès en utilisant une fonction de dérivation prédéterminée ; et
l'étape consistant à utiliser la clé de chiffrement dans la fonction de chiffrement prédéterminée pour chiffrer les données d'identification d'accès.

**10.** Noeud fournisseur selon la revendication 8, dans lequel les moyens de chiffrement sont configurés de telle manière que l'étape consistant à utiliser la fonction de chiffrement prédéterminée et ledit au moins un identifiant déterminé du point d'accès pour chiffrer les données d'identification d'accès comporte l'étape consistant à chiffrer des données de vérification conjointement avec les données d'identification d'accès, lesdites données de vérification ayant pour objet de valider le résultat du déchiffrement des données d'identification d'accès chiffrées en utilisant ladite fonction de chiffrement prédéterminée.

**11.** Noeud fournisseur selon la revendication 10, dans lequel les moyens de chiffrement sont configurés de telle manière que lesdites données de vérification sont dérivées (S506) à partir dudit au moins un identifiant déterminé du point d'accès en utilisant une fonction de dérivation prédéterminée.

**12.** Noeud fournisseur selon la revendication 8, dans lequel le premier noeud comporte un premier terminal d'utilisateur, d'un premier utilisateur (102), configuré pour exécuter un premier client de communication (108) à des fins de communication par l'intermédiaire du système de communication, et dans lequel le deuxième noeud comporte un deuxième terminal d'utilisateur, d'un deuxième utilisateur (110), configuré pour exécuter un deuxième client de communication (114) à des fins de communication par l'intermédiaire du système de communication, dans lequel les premier et deuxième utilisateurs sont des contacts dans le système de communication et dans lequel les moyens de fourniture sont configurés de telle manière que les données d'identification d'accès chiffrées sont autorisées à être fournies au deuxième noeud si le deuxième utilisateur est un contact du premier utilisateur.

13. Noeud fournisseur selon la revendication 8, dans lequel ledit au moins un identifiant du point d'accès comporte un identifiant de l'ensemble de services et une adresse de commande d'accès au support du point d'accès.

14. Noeud fournisseur selon la revendication 8, dans lequel les données d'identification d'accès comportent au moins l'un parmi :

      (i) un procédé de chiffrement ;
      (ii) un algorithme de chiffrement ; et
      (iii) une clé de réseau,

à des fins d'utilisation pour accéder au réseau par le biais du point d'accès.

15. Produit programme informatique comportant des instructions lisibles par ordinateur à des fins d'exécution par un moyen de traitement d'informatique (202) au niveau d'un premier noeud (104) d'un système de communication (100) servant à fournir des données d'identification d'accès en provenance du premier noeud à un deuxième noeud (112) du système de communication, lesdites données d'identification d'accès servant à accéder à un réseau (120) par le biais d'un point d'accès (122), les instructions comportant des instructions permettant d'effectuer le procédé selon la revendication 1.

Fig 1

EP 2 687 036 B1

EP 2 687 036 B1

Fig 2

```
┌─────────────────────────────────────┐
│       Scan for wireless networks      │  ⌇—S302
└─────────────────────────────────────┘
                  │
                  ▼
┌─────────────────────────────────────┐
│   Receive access credentials from User A │  ⌇—S304
└─────────────────────────────────────┘
                  │
                  ▼
┌─────────────────────────────────────┐
│        Store the access credentials    │  ⌇—S306
└─────────────────────────────────────┘
                  │
                  ▼
┌─────────────────────────────────────┐
│  First user indicate which users are permitted │  ⌇—S308
│    to access the stored access credentials │
└─────────────────────────────────────┘
                  │
                  ▼
┌─────────────────────────────────────┐
│   Second client retrieve access credentials │  ⌇—S310
│              from the store             │
└─────────────────────────────────────┘
                  │
                  ▼
┌─────────────────────────────────────┐
│  Store the retrieved access credentials at the │  ⌇—S312
│            second user terminal         │
└─────────────────────────────────────┘
                  │
                  ▼
┌─────────────────────────────────────┐
│   Second client check for available access │  ⌇—S314
│                points                   │
└─────────────────────────────────────┘
                  │
                  ▼
┌─────────────────────────────────────┐
│   Second client access the network using the │  ⌇—S316
│         retrieved access credentials    │
└─────────────────────────────────────┘
```

Fig 3

Fig 4

```
┌─────────────────────────────────────────────────┐
│   Determine SSID and MAC address of access point 122  │────S502
└─────────────────────────────────────────────────┘
                        │
                        ▼
┌─────────────────────────────────────────────────┐
│   Derive encryption key from SSID and MAC address    │────S504
└─────────────────────────────────────────────────┘
                        │
                        ▼
┌─────────────────────────────────────────────────┐
│              Derive check data                      │────S506
└─────────────────────────────────────────────────┘
                        │
                        ▼
┌─────────────────────────────────────────────────┐
│   Encrypt access credentials and check data using    │────S508
│              encryption key                         │
└─────────────────────────────────────────────────┘
                        │
                        ▼
┌─────────────────────────────────────────────────┐
│  Provide encrypted access credentials and check data │────S510
│              to the client 114                      │
└─────────────────────────────────────────────────┘
                        │
                        ▼
┌─────────────────────────────────────────────────┐
│   Client 114 receive SSID and MAC address from       │────S512
│              access point 122                       │
└─────────────────────────────────────────────────┘
                        │
                        ▼
┌─────────────────────────────────────────────────┐
│   Use SSID and MAC address to derive decryption key  │────S514
└─────────────────────────────────────────────────┘
                        │
                        ▼
┌─────────────────────────────────────────────────┐
│   Decrypt encrypted access credentials and check data│────S516
└─────────────────────────────────────────────────┘
                        │
                        ▼
                                          S518
              ╱◇╲
     Yes    ╱ Is decrypted ╲    No
  ┌────────╱  check         ╲────────┐
  │        ╲  data valid?   ╱        │
  │         ╲◇╱                      │
  ▼                                  ▼
┌──────────────────────┐    ┌──────────────────────┐
│ Access network using │    │ Decrypted access     │
│ decrypted access     │    │ credentials are      │────S522
│ credentials          │    │ not valid            │
└──────────────────────┘    └──────────────────────┘
 S520
```

## Fig 5

**REFERENCES CITED IN THE DESCRIPTION**

**Patent documents cited in the description**

- US 20050050318 A
- WO 2005009019 A